# EUROPÄISCHE PATENTSCHRIFT

(11) **EP 1 394 007 B1**
(45) Veröffentlichungstag und Bekanntmachung des Hinweises auf die Patenterteilung: **29.08.2007**
(21) Anmeldenummer: 03011688.3
(22) Anmeldetag: 23.05.2003
(51) Int. Cl.: B60T 7/04, G05G 1/14

(54) **Betätigungsmittel zum Beeinflussen einer Anlage zum Bremsen, Kuppeln oder Antrieb eines Kraftfahrzeuges**
Actuating device to affect an installation of the brakes, clutch or motor of a vehicle
Moyen de actionnement pour influer sur une installation de freins, embrayage ou moteur d'un véhicule automobile

(30) Priorität: 30.08.2002 DE 10239913
(43) Veröffentlichungstag der Anmeldung: 03.03.2004
(73) Patentinhaber: AUDI AG, 85045 Ingolstadt (DE)
(72) Erfinder: Sturmhoebel, Jörg, 85139 Wettstetten (DE); Landsiedel, Thomas, 85110 Kipfenberg (DE); Mäusbacher, Bernhard, 85080 Gaimersheim (DE)
(74) Vertreter: Asch, Konrad

(56) Entgegenhaltungen:
- DE-A- 19 738 183
- DE-A- 19 836 692
- US-A- 5 115 162
- US-B1- 6 179 390

## Beschreibung

Die Erfindung betrifft eine Vorrichtung zum Beeinflussen einer Anlage zum Bremsen, Kuppeln oder Antrieb eines Kraftfahrzeugs nach dem Oberbegriff des Anspruchs 1.

Ein bekanntes Betätigungsmittel einer Antriebs-, Brems- oder Kupplungsanlage eines Kraftfahrzeuges, besteht aus einem Fußpedal (Fahr-, Brems- und/oder Kupplungspedal). Das Wirkprinzip des Fußpedals besteht im Durchlaufen eines Schwenkweges in Folge manuellen Drucks. Dabei wird ein Pedal in Form eines Pedalhebels betrachtet, welches ein Signal erzeugt und dieses zur Steuerung einer Antriebs-, Brems- oder Kupplungsanlage weiterleitet.

Aus Sicht der Bremsanlage kann dies beispielsweise eine elektrohydraulische Bremsanlage (mindestens mit Steuergerät, Hydroaggregat und Bremsmittel für das Rad) oder eine elektromechanische Bremsanlage sein. Es existiert keine Einschränkung bezüglich der Bremsanlage.

Ein wesentlicher Aspekt eines solchen bekannten Pedals als Betätigungsmittel ist, dass es von der restlichen Anlage mechanisch entkoppelt ist. Dennoch wird im Stand der Technik ein Pedalweg beim Betätigungsmittel vorgesehen, um das bekannte Pedalgefühl dem Fahrer zu verbmitteln.

Die DE 198 11 268 A1 ist eingeschränkt auf ein fußbetätigtes Betätigungsmittel zum Ansteuern von Antriebs- oder Verzögerungsmitteln im Kraftfahrzeug. Es ist dort die Aufgabe, ein fußbetätigtes Betätigungsmittel zu entwickeln, welches aufgrund seiner konstruktiven Gestaltung bei einem Frontalaufprall des Kraftfahrzeuges Fußverletzungen deutlich verringert. Zu diesem Zweck besteht das Betätigungsmittel aus einem einen Druckaufnehmer tragenden Gehäuseteil, welches gegenüber seiner Montagefläche mittels Fußbewegung gegenüber einer Federkraft senkrecht verschiebbar ist bis in die Ebene der Montagefläche. Das Betätigungsmittel ist von dem Antriebs- oder Verzögerungsmittel mechanisch entkoppelt. Es existieren keine verletzungsgefährdenden Konstruktionselemente einer herkömmlichen Pedaleinrichtung.

Es ist dort ein Anliegen, den Pedalweg zu gewährleisten. Nach der bekannten technischen Lösung wird ein vom Pedalweg abhängiges Steuersignal erzeugt (DE 198 11 268 A1, erster Anspruch). Das trifft auch zu für den Ausgestaltungsvorschlag eines Betätigungsmittels, welches aus zwei elastischen, unterschiedlich porösen Körpern zusammengesetzt ist. Der Körper mit dem größeren Elastizitätsmodul soll auch dort einen Pedalweg simulieren.

Die Lösung hat den Nachteil, dass stets eine Vorrichtung zur Simulation einer herkömmlichen Pedaleinrichtung eingesetzt wird. Offenbar soll der Eindruck einer herkömmlichen Pedalbetätigung für den Fahrer erhalten bleiben.

Durch den Betätigungsweg beim Fußdruck auf das Betätigungsmittel entsteht eine längere Schwellzeit bis zum vollen Einsatz der Bremswirkung.

Ein weiterer Nachteil ergibt sich aus der Tatsache, dass einige Fahrer ihre Sitzposition falsch wählen, so dass sie in Notsituationen nicht in der Lage sind das Betätigungsmittel entsprechend weit zu treten.

Die Berücksichtigung des Pedalweges ist aufwändig und ergonomisch ungünstig. Um Verwechslungen zwischen Fahr- und Bremspedal zu vermeiden, wurde beispielsweise ein Stufensprung zwischen beiden Pedalen eingeführt. Der notwendige Pedalbock ist bei der Lösung mittels Pedal ein zusätzliches Bauteil, welches Kosten erzeugt und die Aufprallsicherheit mindert.

Eine Vorrichtung der eingangs angegebenen Art ist in der DE 100 52 442 A1 ist eine Stellvorrichtung mit einem mechanisch verstellbare Bauteil sowie ein Verfahren zum Betreiben der Stellvorrichtung offenbart, wobei die Stellung des mechanisch verstellbaren Bauteils durch einen Sensor detektiert wird, der mit einer elektronischen Auswerteeinheit gekoppelt ist. Das offenbarte Verfahren zeichnet sich dadurch aus, dass für die Ermittlung der Ausgangsstellung des mechanisch verstellbaren Bauteils den Sensorsignalen ein Schwellenwert zugeordnet und in der Auswerteeinrichtung abgespeichert wird, wobei der Bedienzyklus durch die Überschreitung des Schwellwertes und anschließende Rückkehr der Sensorwerte in den Ausgangsbereich definiert wird.

Bei der Vorrichtung des Dokuments DE 197 38 183 A1 ist ein Betätigungsmittel zum Betätigen eines Leistungssteuer- oder Stellelements eines Kraftfahrzeuges durch einen Fahrzeugführer durch ein im Bedienbereich des Fahrzeugführers angeordnetes im wesentlichen flächenförmiges und ortsfesten Bedienelement gebildet, das einen Kraftaufnehmer aufweist, der ein elektrisches Steuersignal bzw. Stellsignal in Abhängigkeit von einer auf das Bedienelement einwirkenden Kraft bildet, mit dem das Leistungssteuer- oder Stellelement steuerbar ist. Diese Steuerung kann direkt oder bei Zwischenschaltung einer Verarbeitungseinrichtung erfolgen, in der das elektrische Signal in eine für das Stellelement geeignete Stellgröße umgewandelt wird. Weiterhin könnte die Verarbeitungseinrichtung eine Bedämpfung des elektrischen Signals des Kraftaufnehmers vornehmen, was z. B. beim Befahren von Schlechtwegstrecken und resultierender, schwellender Krafteinleitung am Kraftaufnehmer von Vorteil für die Drosselklappe wäre.

Aufgabe der Erfindung ist es, bei einer Vorrichtung der eingangs angegebenen Art die Gefahr einer ungewollten Funktionsauslösung mit dem Betätigungsmittel zu verringern.

Die Aufgabe wird gelöst durch die kennzeichnenden Merkmalen des Anspruch 1.

Bei der erfindungsgemäßen Vorrichtung ist der Kraftaufnehmer auf einen in einem Logikblock der Anlage gespeicherten Schwellwert der Kraft eingestellt, dessen Überschreitung erst ein Signal für eine Beeinflussung der Anlage erzeugt.

Das Betätigungsmittel erfasst die individuelle Betätigungskraft des Fahrers, die unabhängig von einem Betätigungsweg ist, oberhalb des Schwellwertes.
Geringere Betätigungskräfte des Fahrers bleiben unberücksichtigt. Das Betätigungsmittel ist ein Kraftaufnehmer, der die Kraft oder ein Moment erfasst und direkt in ein äquivalentes Signal (Steuersignal), vorzugsweise elektrisches Signal , wandelt und zwar unabhängig von einem Betätigungsweg.

Das Betätigungsmittel kann als piezokeramischer Kraftaufnehmer, als Dehnungsmessstreifen oder in Kombination ausgebildet sein. Der Kraftaufnehmer kann auch durch einen Momentaufnehmer gebildet werden, wenn drehende Kräfte zu erfassen wären. Das Betätigungsmittel kann im Fußraum des Fahrers oder im Bereich des Lenkrades angeordnet sein. Bei elektrohydraulischen Bremsanlagen, die ein Pedal benötigen, sollte das Betätigungsmittel am Fußpedal angeordnet sein. Das Betätigungsmittel könnte generell auch redundant ausgeführt sein.

Die Erfindung ist bei Kraftfahrzeugen dort einsetzbar, wo ein Betätigungsmittel ohne einen die Anlage beeinflussenden Betätigungsweg wünschenswert ist.

Somit verlässt die Erfindung vorzugsweise den bekannten weg, beispielsweise bei der Ermittlung des Fahrerbremswunsches, einem Fahrer das gewohnte Gefühl eines Pedalweges zu vermitteln. Alternativ ist ein Einsatz der Erfindung auch bei einer (technisch bedingt) pedalgeführten Bremsanlage möglich.

Die Erfindung beabsichtigt ein für den Fahrer generell "wegloses", d. h. ohne Betätigungsweg zu betätigendes Betätigungsmittel einzusetzen. Die Erfindung benötigt keinen Betätigungsweg am Betätigungsmittel und verzichtet grundsätzlich auf die Erzeugung eines vom Betätigungsweg abhängiges Signal, welches der entsprechenden Anlage, z. B. Bremsanlage, als Fahrerbremswunsch zuzuführen ist.

Aufgrund der deutlich unterscheidbaren Haptik zu einem weggesteuerten Fahrpedal kann der Stufensprung deutlich verringert oder sogar vermieden werden. Das ist ein deutlicher Ergonomievorteil. Speziell bei der elektrohydraulischen Bremsanlage ergibt sich der Vorteil, dass durch den Wegfall des Pedalwegsimulators dieser im Zustand der hydraulischen Rückfallebene nicht befüllt werden muss. Es ergibt sich daraus ein kürzeres, für den Fahrer besser handhabbares Pedal.

Nachfolgend wird die Erfindung anhand von Ausführungsbeispielen und dazugehöriger Zeichnungen erläutert. Es zeigen
- **Fig. 1**: elektromechanische Bremsanlage mit einem krafterfassendem Betätigungsmittel,
- **Fig. 2**: elektrohydraulische Bremsanlage mit einem krafterfassendem Betätigungsmittel.
- **Fig. 3**: Radbremsdruck in Abhängigkeit der Fußkraft

Das Betätigungsmittel dient der Beeinflussung (Betätigung) einer Antriebsanlage (Fahrzeugmotor) oder der Bremsanlage des Fahrzeuges oder der Kupplungsanlage eines Fahrzeuges.

Bei einer Antriebsanlage dient das Betätigungsmittel dem Erfassen eines Fahrergeschwindigkeitswunsches, der in elektrische Steuersignale für nachfolgende Motorsteuergeräte gewandelt wird, welche die Grundlage für die Veränderung der Drehzahl des Fahrzeugmotors, d. h. für die Veränderung der Fahrzeuggeschwindigkeit bilden.

Bei einer Bremsanlage dient das Betätigungsmittel zum Erfassen eines Fahrerbremswunsches, der in elektrische Steuersignale für Bremssteuergeräte gewandelt wird, welche zur Einleitung einer Verzögerung des Fahrzeuges durch die Bremsanlage genutzt wird.

Bei einer Kupplungsanlage dient das Betätigungsmittel zum Erfassen eines Fahrerkupplungswunsches, welcher in elektrische Steuersignale gewandelt wird und der Kupplungssteuerung zugeführt wird und dort zur Einleitung eines Kupplungsvorganges mittels Kupplungsanlage dient. Die entsprechenden Stellglieder der Motor-, Brems- oder Kupplungsanlage bilden die Aktorik.

Im Normalbetrieb besteht keine mechanische Verbindung zwischen einem Betätigungsmittel und der Aktorik der betreffenden Anlage.

Das Betätigungsmittel kann per Fuß oder per Hand vom Fahrer betätigt werden. Bei Betätigung des Betätigungsmittels per Fuß, ist das Betätigungsmittel im bekannten Fußraum des Fahrers angeordnet. Bei Handbetätigung des Betätigungsmittels kann dieses beispielsweise im Bereich des Lenkrads angeordnet sein.

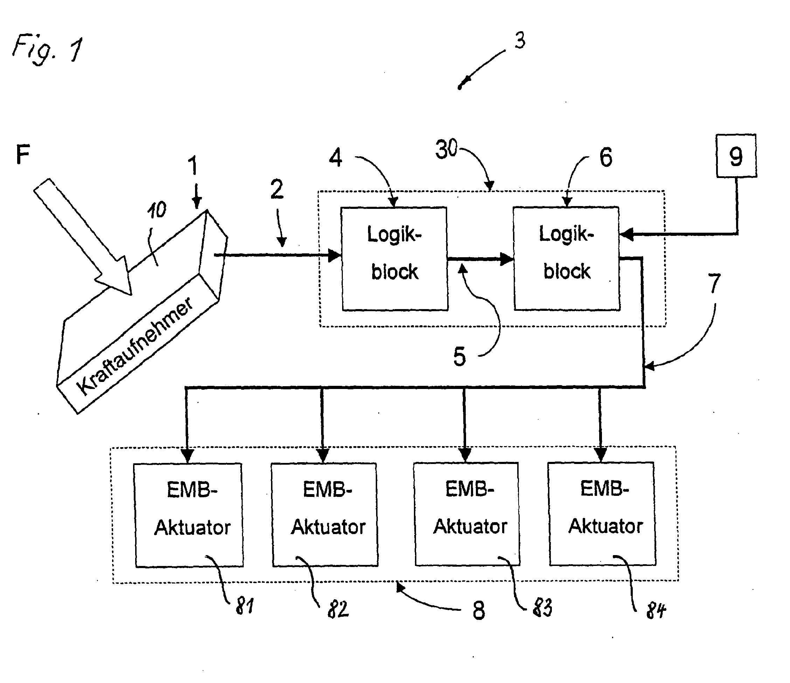

Entsprechend **Fig. 1** wird die Funktionsweise eines Betätigungsmittels anhand des Beispiels einer elektromechanischen Bremse dargestellt. Das Ausführungsbeispiel betrachtet ein nach der Erfindung beschriebenes Betätigungsmittel für die Bremsanlage, wobei die anderen beiden Betätigungsmittel für Kupplungsanlage und Fahrzeugantrieb nach konventioneller Art ausgebildet sein können. Im Fußraum für den Fahrer eines Kraftfahrzeuges sind beispielsweise angeordnet ein Kupplungspedal nach bekannter Bauart, ein Fahrpedal nach bekannter Bauart und ein erfindungsgemäßes Betätigungsmittel für die Bremsanlage. Das bekannte Bremspedal im Fußraum auf der Fahrerseite entfällt.

Als Betätigungsmittel wird auf den biegesteifen Boden des dortigen Fußraumes ein Aufnehmer (Sensor) angeordnet, der grundsätzlich keinen Betätigungsweg simuliert und keinen Betätigungsweg bei Fußbedienung durch den Fahrer erfordert. Diese Anforderung wird erfüllt beispielsweise durch Einsatz eines Dehnungsmessstreifens oder einer Piezokeramik als Betätigungsmittel. Dehnungsmessstreifen oder Piezokeramik können zwischen Kupplungspedal und Gaspedal angeordnet sein und beispielsweise eine flächenhafte Ausdehnung bis in Größe des Schuhwerks haben.
Beabsichtigt ist eine abgegrenzte, unterscheidbare Fläche zum Zwecke der Positionserkennung.

Der Fahrer drückt mit einem Fuß auf das die Fußkraft detektierende Betätigungsmittel, einen Aufnehmer, und nur die mit dem Fuß ausgeübte Kraft bildet ein elektrisches Signal, welches Maßstab für den Fahrerbremswunsch ist. Das Betätigungsmittel hat keinen Betätigungsweg. Um einem Ausfall eines Kraftaufnehmers vorzubeugen, kann der Kraftaufnehmer entsprechend redundant ausgeführt sein, d.h. im Notfall erfolgt eine Umschaltung auf einen zweiten, parallel geführten Kraftaufnehmer bzw. eine permanente Auswertung und Plausibilisierung vorliegender Signale.

Als zusätzliches Signal kann auch die Fußkraftänderung ausgewertet werden. Die Fußkraftänderung kann aus einem entsprechenden Sensor bzw. im Steuergerät aus dem zeitlichen Verlauf des Fußkraftsignals generiert werden.

Das Fußkraftsignal würde an ein Steuergerät 30 einer elektromechanischen Bremsanlage 3 übermittelt. Das Steuergerät 30 beinhaltet mindestens einen Logikblock 4 zur Berechnung des Fahrerbremswunsches, welcher hierzu ein berechnetes Fahrerbremswunschsignal 5 an einen Logikblock 6 (mit Prioritätensteuerung) übermittelt.

Nach einer weiteren Ausgestaltung kann in dem Logikblock 4 (400) ein Schwellwert im Speicher hinterlegt sein, der einen Betrag der Kraft repräsentiert bei dessen Überschreitung erst ein Steuersignal erzeugt wird zur Beeinflussung der Bremsanlage. Damit wird es möglich, dass eine geringere, tastende Fußkraft zum Auffinden bzw. Positionieren des Fahrerfußes nicht sofort einen Fahrerbremswunsch auslöst.

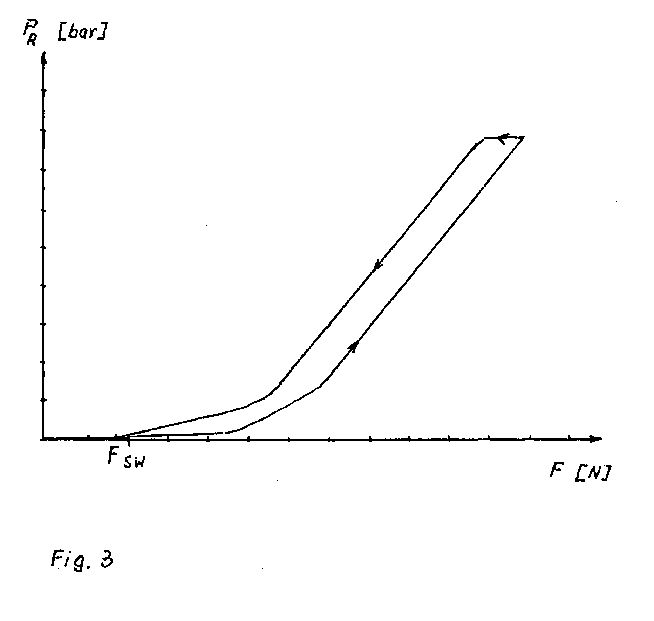

Dieser Sachverhalt widerspiegelt sich in der Kennlinie nach **Fig. 3.** Dort ist der Radbremsdruck P_{R} in Abhängigkeit der Fußkraft F des Fahrers dargestellt. Unterhalb eines empirisch festzulegenden Schwellwertes F_{SW} der Fußkraft wird diese als eine "Pedalsuchkraft" akzeptiert, die zu keiner Auslösung einer Verzögerungsreaktion des Fahrzeuges führt. Der Radbremsdruck P_{R} hat folglich den Wert Null, obwohl eine Fußkraft F vorhanden ist, z.B. beim Tasten nach dem Betätigungsmittel.

Bei einem Überschreiten des Schwellwertes F_{SW} wird der Verzögerungswunsch in Abhängigkeit der Fußkraft mittels entsprechendem Radbremsdruck umgesetzt. Der Anstieg der Kennlinie erfolgt relativ sanft. Das entspricht einem "weichen" Bremsverhalten und bringt eine gute Dosierbarkeit der vom Radbremsdruck erzeugten Bremskraft des Bremsmittels. Das ist zweckmäßig beim Ein- und Ausparken oder beim sanften Abbremsen bis in den Stand (ruckfreies Anhalten).
Die Kennlinie kann fortgesetzt werden z.B. durch einen linearen Anstieg. Ist die Erfüllung des Fahrerbremswunsches absehbar und lässt die Fußkraft deshalb nach, so muss nicht sofort auch der Abfall des Radbremsdruckes erfolgen. Entsprechend einer im logischen Block des Bremssystems einstellbaren Hysterese (realisiert z.B. mittels einer Software) erfolgt der Abfall des Radbremsdruckes P_{R} etwas verzögert und in einer nunmehr versetzten, abwärtslaufenden Kennlinie. Die abwärtslaufende Kennlinie ist ähnlich gehalten wie die aufwärtslaufende Kennlinie, jedoch mit vorhandener Hysterese.

Zurück zu Fig. 1.
Vom Steuergerät 30 erfolgt über den Signalpfad 7 die Ansteuerung der Radbremsen. Der Logikblock 6 kann zusätzliche Eingangsgrößen 9 (wie beispielsweise Verzögerungsanforderungen anderer Systeme, Eingriffe von Radschlupfregelsystemen) erhalten. Das Steuergerät 30 liefert ein Stellsignal zur Ansteuerung der jeweils einzelnen Radbremse. Die einzelne Radbremse wird gebildet von einem elektrisch beeinflussbaren Aktuator, der auf eine bekannte Radbremse wirkt.

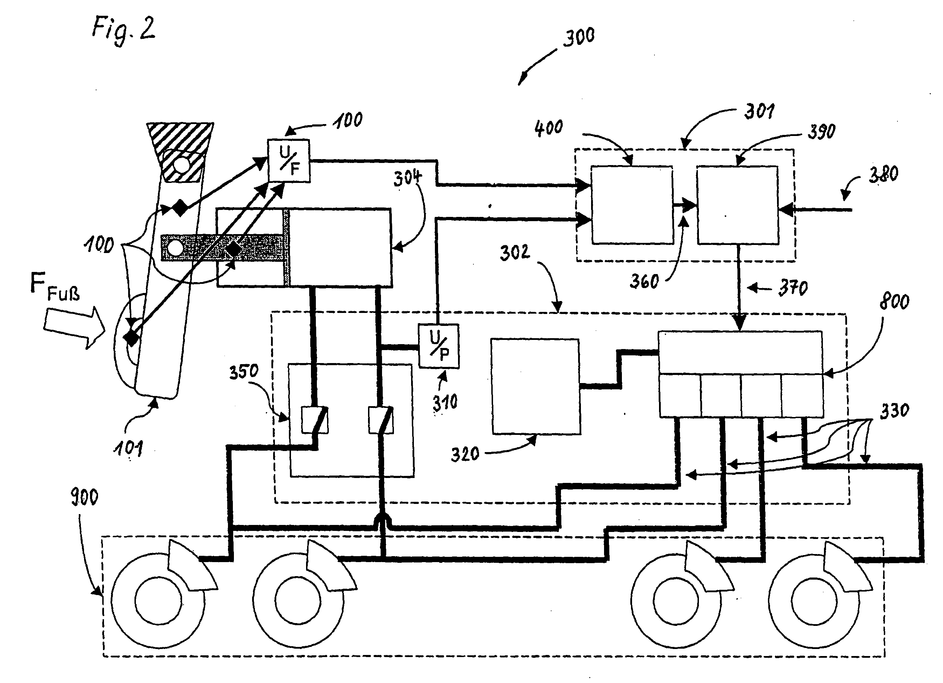

**Fig. 2** zeigt den Einsatz eines kraftaufnehmenden Betätigungsmittels 100 (auch nachfolgend Kraftaufnehmer genannt) im Zusammenhang mit einer bekannten elektrohydraulischen Bremsanlage 300. Aufgrund der dort noch vorhandenen hydraulischen Rückfallebene 302 ist weiterhin ein bekanntes Pedal 101 erforderlich. Das ist nur aufgrund des vorhandenen Hydrauliksystems bedingt. Das Pedal 101 ist als Hebel in bekannter Weise drehgelagert und mit der Kolbenstange eines hydraulischen Druckzylinders 304 verbunden. Der Druckzylinder 304 ist mit einem Drucksensor 310 verbunden, der ein dem hydraulischen Druck proportionales elektrisches Signal erzeugt, welches dem Steuergerät 301 zugeführt wird. Im weiteren ist der Druckzylinder 304 durch Trennventile 350 vom hydraulischen Bremskreislauf getrennt und nur im Notfall durch Schließen der Trennventile 350 als Nothilfseinrichtung nutzbar.

Am Pedal 101, vorzugsweise auf der Kolbenstange des hydraulischen Druckzylinders 304, ist mindestens ein Aufnehmer 100 installiert, welcher ein Kraftaufnehmer ist. Der Kraftaufnehmer 100 als Betätigungsmittel kann jedoch alternativ auch auf der Fußpedalfläche oder in der Struktur des Fußpedals angeordnet sein. Als Kraftaufnehmer 100 ist beispielsweise ein Dehnungsmessstreifen oder eine Piezokeramik eingesetzt. Die auf den Kraftaufnehmer 100 ausgeübte Fußkraft wird direkt in ein elektrisches Signal gewandelt, welches an das Steuergerät 301 übermittelt wird. Der Logikblock 400 zur Berechnung des Fahrerbremswunsches erhält sowohl das Signal des Kraftaufnehmers 100, als auch das Signal des hydraulischen Druckzylinders 304. Im Logikblock 400 zur Berechnung des Fahrerbremswunsches sind Softwareprogramme hinterlegt, die ein für den Fahrerbremswunsch repräsentatives Signal 360 ermitteln und an einen Logikblock 390 zur Prioritätensteuerung übermitteln. Zu verstehen sind hier die Prioritäten in der Ansteuerung der einzelnen Bremsmittel am Rad. In den Logikblock 390 zur Prioritätensteuerung können noch externe Eingangsgrößen 380 (Bremsanforderungen, usw. anderer Systeme, z. B. Radschlupfregelsystem) eingeführt sein. Vom Steuergerät 301 wird ein Signal 370 zur Sollvorgabe des Radbremsdruckes an die einzelnen Raddruckmodulatoren 800 übermittelt. Die Raddruckmodulatoren 800 stehen in Verbindung mit einer hydraulischen Energieversorgung 320. Über die hydraulische Verbindung 330 zu den Radbremsen 900, wird von den Raddruckmodulatoren 800 der notwendige hydraulische Druck gegenüber der einzelnen Scheiben oder Trommelbremse des Rades übermittelt.

Das Betätigungsmittel kann auch redundant ausgeführt sein. Neben einem ersten Betätigungsmittel auf der Fahrerseite kann mindestens ein weiteres Betätigungsmittel auf der Mittelkonsole zwischen Fahrer- und Beifahrerposition oder im Fußraum des Beifahrers angeordnet sein, welches in Abhängigkeit einer Vorrangsteuerung erst wirksam würde, wenn das erste Betätigungsmittel zum Eingriff verhindert ist.

Das Betätigungsmittel ist ein Aufnehmer, der ein Kraftaufnehmer ist und in einer weiteren Ausgestaltung auch als (Dreh-) Momentaufnehmer ausgebildet sein kann, wenn eine Anordnung in Verbindung mit einem Gelenk beabsichtigt wäre. Der Kraftaufnehmer kann auch aus Dehnungsmessstreifen und piezokeramischen Streifen gebildet werden.

## Patentansprüche

1. Vorrichtung zum Beeinflussen einer Anlage zum Bremsen, Kuppeln oder Antrieb eines Kraftfahrzeuges, mit einem von einem Fahrer betätigbaren Betätigungsmittel (1), das mechanisch von der Aktorik der Anlage entkoppelt ist, und ein ausschließlich die Betätigungskraft des Fahrers detektierender Kraftaufnehmer (10; 100) ist, wobei der Kraftaufnehmer (10; 100) ein Steuersignal erzeugt, dessen Erzeugung von einem Betätigungsweg unabhängig ist und keinen Betätigungsweg hat, **dadurch gekennzeichnet, dass** in einem Logikblock (4; 400) eine Kennlinie gespeichert ist, anhand derer ein Wirkzusammenhang zwischen der Betätigungskraft des Fahrers und dem Signal für die Beeinflussung der Anlage vorgegeben ist, wobei die Kennlinie mehrere Intervalle unterschiedlicher Steigung und einen Schwellwert für die Betätigungskraft des Fahrers aufweist, und erst nach Überschreiten des Schwellwertes ein entsprechendes Signal für die Beeinflussung der Anlage vorgegeben ist, wobei das sich dem Schwellwert unmittelbar anschließende Intervall eine geringere Steigung als die/das nachfolgende(n) Intervall(e) aufweist.

2. Vorrichtung nach Anspruch 1, **dadurch gekennzeichnet, dass** das Betätigungsmittel (1) ein piezokeramischer Kraftaufnehmer (10;100) ist.

3. Vorrichtung nach Anspruch 1, **dadurch gekennzeichnet, dass** das Betätigungsmittel (1) ein Dehnungsmessstreifen ist.

4. Vorrichtung nach Anspruch 1, **dadurch gekennzeichnet, dass** das Betätigungsmittel (1) von einem Dehnungsmessstreifen und einem piezokeramischen Kraftaufnehmer gebildet ist.

5. Vorrichtung nach Anspruch 1, **dadurch gekennzeichnet, dass** das Betätigungsmittel (1) ein Drehmomentaufnehmer ist.

6. Vorrichtung nach Anspruch 1, **dadurch gekennzeichnet, dass** das Betätigungsmittel (1) im Fußraum auf der Fahrerseite angeordnet ist.

7. Vorrichtung nach Anspruch 1, **dadurch gekennzeichnet, dass** das Betätigungsmittel (1) an einem Fußpedal angeordnet ist.

8. Vorrichtung nach Anspruch 1, **dadurch gekennzeichnet, dass** das Betätigungsmittel (1) im Bereich des Lenkrads angeordnet ist.

9. Vorrichtung nach einem oder mehreren der vorhergehenden Ansprüche, **dadurch gekennzeichnet, dass** neben dem Betätigungsmittel (1) auf der Fahrerseite ein zusätzliches Betätigungsmittel auf der Mittelkonsole zwischen Fahrer- und Beifahrerposition oder im Fußraum der Beifahrerseite angeordnet ist.

## Claims

1. Device for the influencing of an installation for the braking, clutching or drive of a motor vehicle, with a means of actuation (1) actuable by a driver, which is mechanically uncoupled from the active part of the installation and is a power receiver (10; 100) exclusively detecting the actuating force of the driver, whereby the power receiver (10; 100) produces a control signal whose production is independent of an actuation path and has no actuation path, **characterised by the fact** that in a software block (4; 400) a characteristic curve is stored, by means of which a function connection is preset between the actuation force of the driver and the signal for the influencing of the installation, with the characteristic curve exhibiting several intervals of different pitch and a threshold value for the driver's actuation force and only after exceeding the threshold value is a corresponding signal given for the influencing of the installation, with the interval directly adjoining the threshold value exhibiting a smaller pitch than the subsequent interval(s).

2. Device according to claim 1, **characterised by the fact** that the means of actuation (1) is a piezoceramic power receiver (10; 100).

3. Device according to claim 1, **characterised by the fact** that the means of actuation (1) is an extensometer strip.

4. Device according to claim 1, **characterised by the fact** that the means of actuation (1) is formed by an extensometer strip and a piezoceramic power reveiver.

5. Device according to claim 1, **characterised by the fact** that the means of actuation (1) is a torque receiver.

6. Device according to claim 1, **characterised by the fact** that the means of actuation (1) is fitted in the foot room on the driver's side.

7. Device according to claim 1, **characterised by the fact** that the means of actuation (1) is fitted on a foot pedal.

8. Device according to claim 1, **characterised by the fact** that the means of actuation (1) is fitted in the region of the steering wheel.

9. Device according to one or several of the foregoing claims, **characterised by the fact** that besides the means of actuation (1) on the driver's side an additional means of actuation is fitted on the central console between the driver's and the passenger's position or in the foot room of the passenger's side.

## Revendications

1. Dispositif destiné à influer sur un système de freinage, d'embrayage ou d'entraînement d'un véhicule automobile, comprenant un moyen d'actionnement (1) pouvant être actionné par un conducteur, qui est découplé mécaniquement de l'actionneur du système, et un capteur de force (10 ; 100) détectant exclusivement la force d'actionnement du conducteur, le capteur de force (10 ; 100) produisant un signal de commande dont la production est indépendante d'un trajet d'actionnement et ne présente aucune trajet d'actionnement, **caractérisé en ce qu'**une courbe caractéristique est mémorisée dans un bloc logique (4 ; 400), au moyen de laquelle est prédéfinie une relation de fonctionnement entre la force d'actionnement du conducteur et le signal pour influer sur le système, la courbe caractéristique comprenant plusieurs intervalles d'un pas différent et une valeur seuil pour la force d'actionnement du conducteur, et ce n'est qu'après le dépassement de la valeur seuil qu'un signal correspondant pour influer sur le système est prédéfini, l'intervalle directement liée à la valeur seuil comprenant un pas plus faible que celui de l'intervalle/des intervalles suivant(s).

2. Dispositif selon la revendication 1, **caractérisé en ce que** le moyen d'actionnement (1) est un capteur de force piézocéramique (10 ; 100).

3. Dispositif selon la revendication 1, **caractérisé en ce que** le moyen d'actionnement (1) est une jauge de contrainte.

4. Dispositif selon la revendication 1, **caractérisé en ce que** le moyen d'actionnement (1) est formé par une jauge de contrainte et un capteur de force piézocéramique.

5. Dispositif selon la revendication 1, **caractérisé en ce que** le moyen d'actionnement (1) est un capteur de couple de rotation.

6. Dispositif selon la revendication 1, **caractérisé en ce que** le moyen d'actionnement (1) est disposé dans l'espace pour les pieds côté conducteur.

7. Dispositif selon la revendication 1, **caractérisé en ce que** le moyen d'actionnement (1) est disposé sur une pédale.

8. Dispositif selon la revendication 1, **caractérisé en ce que** le moyen d'actionnement (1) est disposé dans la zone du volant.

9. Dispositif selon l'une quelconque ou plusieurs des revendications précédentes, **caractérisé en ce qu'**un moyen d'actionnement supplémentaire, en plus du moyen d'actionnement (1) côté conducteur, est disposé sur la console centrale entre la position du conducteur et du passager avant ou dans la zone pour les pieds côté passager avant.
